# EUROPEAN PATENT SPECIFICATION

(11) **EP 1 167 932 B1**
(45) Date of publication and mention of the grant of the patent: **21.11.2007**
(21) Application number: 01112798.2
(22) Date of filing: 28.05.2001
(51) Int. Cl.: G01J 3/20, G01J 3/28, G01J 3/433

(54) **Spectroscopic analysis apparatus**
Gerät zur spektroskopischen Analyse
Appareil d'analyse spectroscopique

(30) Priority: 23.06.2000 JP 2000189862
(43) Date of publication of application: 02.01.2002
(73) Proprietor: HORIBA, LTD., Kyoto (JP)
(72) Inventor: Uemura, Takeshi, Minami-ku, Kyoto (JP)
(74) Representative: Müller - Hoffmann & Partner

(56) References cited:
- EP-A- 0 614 073
- EP-A- 0 834 725
- DATABASE INSPEC [Online] THE INSTITUTION OF ELECTRICAL ENGINEERS, STEVENAGE, GB; February 2000 (2000-02), SHUKLA R P ET AL: "Design, fabrication and performance evaluation of a 22-channel direct reading atomic emission spectrometer using inductively coupled plasma as a source of excitation" XP002288483 Database accession no. 6569520

## Description

### BACKGROUND OF THE INVENTION

### Field of the Invention

The present invention relates to a spectroscopic analyzing apparatus utilized in analyzers which spectroscopically analyze emitted light having various strength distribution dependent upon the component to be measured, such as an Inductively Coupled Plasma (hereinafter referred to as ICP) analyzer which quantitatively analyze amount of element to be measured contained in a sample specimen by using a light emission spectrometry by ICP discharge, a Grow Discharge Spectrometer (hereinafter referred to as GDS) analyzer and the like.

### Description of the Prior Art

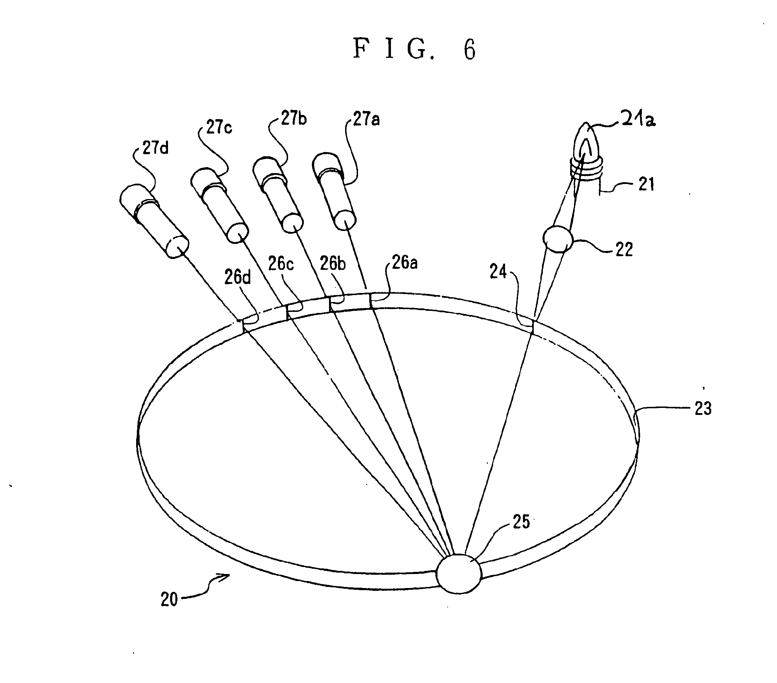

Fig. 6 is a schematic diagram of such a spectrometer 20 in the prior art. The spectrometer 20 represents, for example, the essential part of an ICP analyzer. In Fig. 6. reference numeral 21 denotes a plasma-generating torch. A sample specimen emits light in the plasma torch 21a of the plasma-generating torch 21. Reference numeral 22 is a condenser lens for condensing the light emitted from a specific region in the plasma torch 21a. Reference numeral 23 denotes a Rowland circle, 24 is an inlet slit disposed on the Rowland circle 23, through which the light condensed by the lens 22 passes, and 25 is a diffraction grating, which has a curvature identical to that of the Rowland circle 23.

Reference numerals 26a to 26d denote respectively, an outlet slit disposed on the Rowland circle 23 for passing light having a specific wavelength, which is dispersed by the diffraction grating 25. Reference numerals 27a to 27d denote respectively, a sensor for sensing the strength of light passed through the outlet slits 26a to 26d. Examples of the sensor are a photomultiplier tube and photo-sensing semiconductor. Because the grating 25 forms a convex surface having a curvature identical to that of the Rowland circle 23, the incident light passed through the inlet slit 24 is condensed and focused on one of the outlet slits 26a to 26d, then the respective light enters into the sensors 27a to 27d.

The position of each of the outlet slits 26a to 26d is determined by the light wavelength, as explained above. Each of the elements contained in a sample specimen emits light in the plasma torch 21a, the wavelength of which is inherent to each of the components to be measured. The ICP analyzer in the prior art comprises a plurality of sensors 27a to 27d, each of which is arranged according to the position of the outlet slits 26a to 26d. Therefore each of the sensors 27a to 27d can sense independently a light component associated with different single component to be measured. Some ICP analyzers in the prior art have a sensor, which can be scanned by a sequence control so that the sensor moves in the diffraction direction of the diffraction grating 25. As a result, the sensor can execute a quantitative analysis of a plurality of components to be measured.

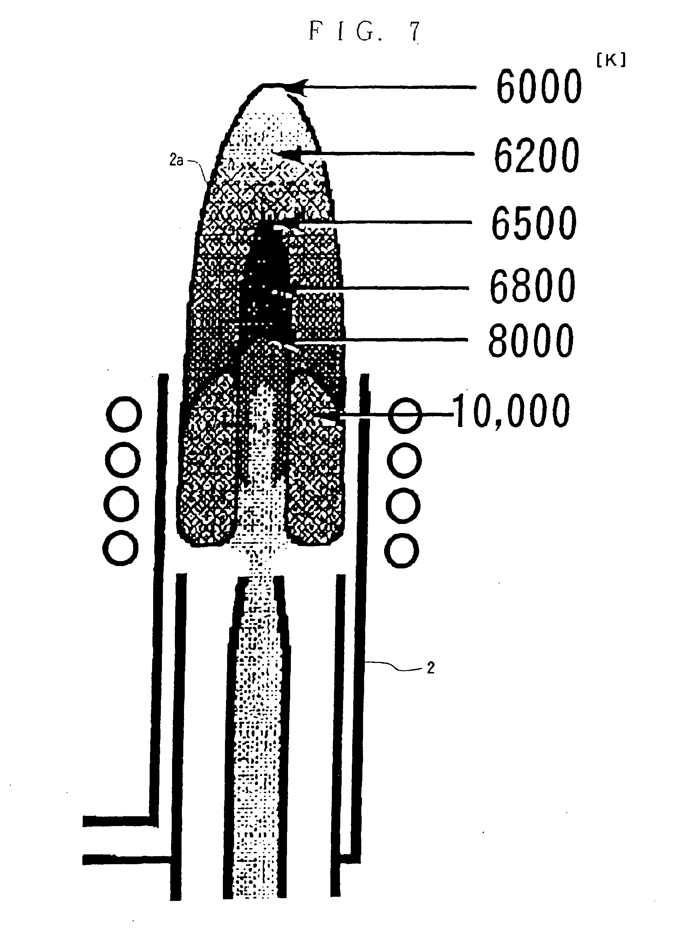

The temperature of the plasma torch 21a distributes from 6,000 K to 10,000 K along its vertical direction, as shown in Fig. 7. The temperature of the sample specimen, which is introduced into the plasma torch 21a from a lower position, changes according to the elapse of its flying time. Therefore, it was inevitable that the position, where the each of the components to be measured emits light, differs remarkably from each other, even when an identical plasma torch 21a is used.

Another problem is that there is a difference in wavelength and in the strength of the light emitted from a component to be measured, according to whether the element is in a state of an ion or in a state of a neutral atom. In other words, the position, which gives the maximum of the ratio of the light amount from the element to that of noise light (i.e., the maximum SN ratio), depends on the kind of the component to be measured.

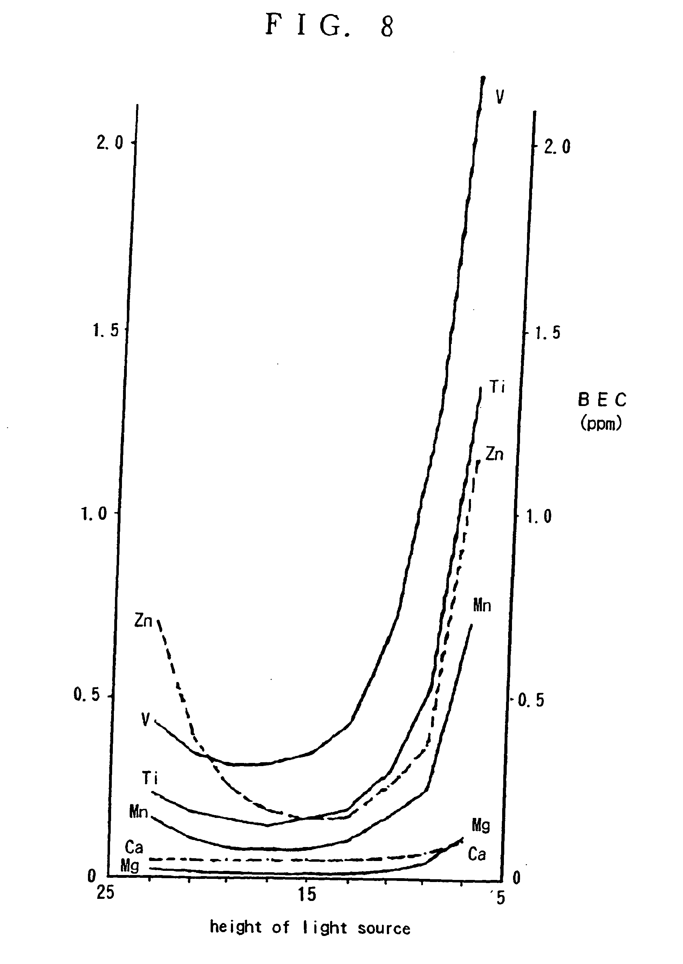

Fig. 8 is a graph showing the value of BEC as a function of the height of the plasma torch 21 in a spectroscopic analyzer 20 in the prior art, for a variety of elements. The value of BEC is the ratio of the intensity of the noise to that of emitted light. Fig. 8 shows that the maximum SN ratio, which corresponds to the minimum BEC value, with respect to Zn is obtained at a height of 13 mm in the plasma torch 21 is. And the corresponding height with respect to Mn is at a height of 17 mm. Therefore, when the vertical position of the plasma torch 21 is changed according to the component to be measured, it is possible to obtain the maximum SN ratio for each of the components.

When Zn, for example, is selected as one of the most important components to be measured, it is possible to adjust the vertical position of the plasma torch 21 to a height of 13 mm. Or, it is possible to determine the vertical position of the plasma torch 21 to a height of 17 mm, for example, which gives an acceptable SN ratio with respect to all of the relevant elements to be analyzed by the analyzer 20. Further, it is possible to move the plasma torch 21 in the vertical direction to obtain an optimal SN ratio for each of the elements to be measured, while the measuring is being executed.

However, the spectroscopic analyzer 20 in the prior art has following drawbacks. When Zn, for example, is selected as a main component to be measured, and the position of the plasma torch 21 is set previously to a height of 13 mm, the SN ratio for other elements (V, Ti, Mn and the like) necessarily deteriorates. The height of the 13 mm is selected, according to the light strength distribution of Zn, which is shown in Fig. 7.

On the other hand, when the vertical position of the plasma torch 21 is set to a position of a height of 17 mm, which gives an acceptable SN ratio for all the elements, the SN ratio for some elements deteriorates excessively. When the plasma torch 21 is moved in the vertical direction, while a measurement is executed, photometry for each position of plasma torch 21 is necessary. Therefore, the measuring time tends to be long. These are disadvantages of the prior art.

Document XP-002288483 discloses a spectroscope with an IPC and a photomultiplier. Document EP-A-834725 discloses a spectroscope for analyzing data. US-A-5260767 discloses a compact all reflective imaging spectrometer.

### SUMMARY OF THE INVENTION

The present invention is invented, considering these drawbacks in the prior art. An object of the present invention is to propose a spectroscopic analyzing apparatus, which can increase the SN ratio, by executing an optimal spectroscopic analysis of light from a light source, for example, light emitted from ICP. Such a light source gives different light spectra inherent to the components to be measured, respectively, each light spectrum having a different strength distribution according to the light emitting position therein.

The spectroscopic analyzing apparatus according to the present invention comprises following constitution for attaining the aforementioned object. Names the spectroscopic analyzing apparatus comprises all the features recited in claim 1, i.e. a light source, which emits different light spectra, each light spectrum being inherent to a component to be measured and having a different strength distribution according to the respective light emitting position; a spectroscope for dispersing the light from the light source according to its wavelength; at least one CTD photo sensor for sensing light being dispersed by the spectroscope and lying within a specific wavelength range; and an optical system for analyzing the light sensed by said at least one CTD photo sensor, thereby making an image of the light source.

A CTD (Charge transfer device) transfers charges for each clock pulse, which is given by a suitable sequence. Using this basic function, video imaging, data storing, signal treatment or logical treatment can be executed. A representative CTD is a CCD (Charge Coupled Device). In a CCD photo-sensing device, a number of micro pixels, each of which is comprised of micro semiconductor photo sensing device, are arranged in a plane.

When a spectrum of light is analyzed, the light source of which gives different light spectrum inherent to the component to be measured and has a different strength distribution according to the light emitting position therein, pixels giving the maximum SN ratio can be selected from a plurality of pixels in the CTD photo-sensing device for each of the components to be measured. And the light intensity sensed by those selected pixels is employed for quantitative analysis.

In determining the measuring condition of in ICP spectroscopic analysis, the optimal measuring position in the plasma torch where the maximum SN ratio is given, is different for each of the components to be measured. However, the displacement of the plasma-generating torch is not necessary in the present invention. A light, which gives the maximum SN ratio, can be selected for each component to be measured. It is possible to execute the spectroscopic analysis at the optimal measuring position for each of the components, simultaneously. Correspondingly, a higher level quantitative analysis can be attained.

Adjustment of the plasma flame position by a user for improving the SN ratio is not needed. Thus, the user can obtain the SN ratio inherent to the analyzer as a matter of routine, namely, he or she can always analyze at the maximum limit of the detection preciseness.

In the main on embodiment of the present invention defined in claim 1, the spectroscopic analyzing apparatus further comprises a memory for storing light intensity spatial distribution information, which is information about the spatial intensity distribution of light emitted from a predetermined quantity of each component to be measured; and an operational portion for determining which components have been measured, which is done on the basis of the values which are measured by said at least one CTD sensor, in particular on the basis of values lying within a strong light portion indicated by the light intensity spatial distribution information and possessing intensity spatial distribution. In this embodiment, the SN ratio can be securely improved, using the light intensity spatial distribution information stored in the memory. And the measurement preciseness can be improved up to the state as best as possible. The light intensity spatial distribution information stored in the memory is the intensity distribution actually measured, using a predetermined quantity of an actual component to be measured. Thus it shall be particularly noted that, even if the distribution depends a little on the form of the light source, a maximum SN ratio measurement can be attained. Claims 2 and 3 define additional embodiments of the invention.

### BRIEF DESCTRIPTION OF THE DRAWINGS

Fig. 1 is a schematic perspective view of an example of spectroscopic analyzing apparatus according to the present invention.
Fig. 2 shows examples of intensity distribution of light emitted from a plasma flame.
Fig. 3 shows an image of a plasma torch formed on a CCD photo-sensing device in the case that the measurement is executed in the transverse direction.
Fig. 4 shows examples of measuring portion in the CCD photo-sensing device, which differ according to the content to be measured.
Fig. 5 shows an image of a plasma flame formed a CCD photo-sensing device in the case that the measurement is executed in the longitudinal direction.
Fig. 6 is a schematic diagram of a spectroscopic analyzing apparatus in the prior art.
Fig. 7 is an example of the temperature distribution in a plasma flame.
Fig. 8 is a graph showing an analysis preciseness as a function of the measuring height of the plasma flame.

### DETAILED DESCRIPTION OF THE PREFERRED EMBODIMENTS

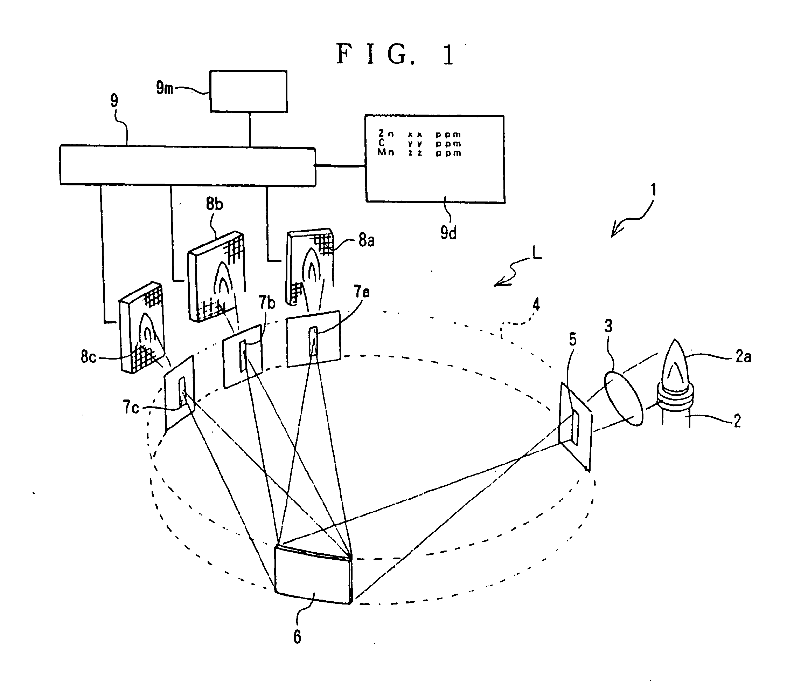

Fig. 1 is an example of a spectroscopic analyzing apparatus 1 according to the present invention, which is applied to an ICP for multi-purpose type. In Fig. 1, reference numeral 2 denotes a plasma-generating torch. Sample specimen emits light in the plasma flame 2a of the plasma-generating torch 2. Reference numeral 3 denotes a condenser lens for condensing light emitted from a larger part of the plasma flame 2a, 4 is a Rowland circle, 5 is an inlet slit disposed on the Rowland circle 4 for passing the light condensed by the lens 3. Reference numeral 6 denotes a diffraction grating having a curvature identical to that of the Rowland circle 4. The diffraction grating is no more than an example of spectroscope.

Reference numerals 7a to 7c denote outlet slits disposed on the Rowland circle 4 for passing the light having a specific wavelength dispersed by the diffraction grating 6. Reference numerals 8a to 8c denote CCD (Charge Coupled Device) photo-sensing devices for sensing the light passed one of the outlet slits 7a to 7c. In this example, a polychromatic optical system L is formed by the inlet slits 5, diffraction grating 6, and outlet slits 7a to 7c, which are arranged on an identical Rowland circle 4.

Because the optical system L is polychromatic, the incident light passed through the inlet slit 5 is dispersed to individual wavelength by a diffraction grating 6, and simultaneously the dispersed lights are condensed on one of the outlet slits 7a to 7c. Namely, they are arranged so that an image of the plasma flame 2a is formed on each of the CCD photo-sensing devices 8a to 8c, which are disposed correspondingly at each of the outlet slits 7a to 7c.

Each of the CCD photo-sensing devices 8a to 8c is comprised of a plurality of pixels, which are arranged in a two-dimensional array to form a plane. And an image of the light from the light source, i.e. plasma flame 2a, is formed on the CCD photo-sensing devices 8a to 8c. Therefore, the spatial distribution of the light intensity can be measured, by measuring the intensity of the sensed light at each of the pixels. Namely, it is possible to measure the light emission intensity at each position in the plasma flame 2a.

Reference numeral 9 denotes a microcomputer, which is an example of the operational portion. The microcomputer 9 is connected to each of the CCD photo-sensing devices 8a to 8c. The microcomputer 9 includes a memory 9m for storing the light intensity distribution information, which is information of the spatial distribution of light emitted from the specific components to be measured. The microcomputer 9 further includes a display 9d. The microcomputer 9 is connected to the photo-sensing devices 8a to 8c. And the light intensity sensed by the CCD photo-sensing devices 8a to 8c is inputted to the microcomputer 9. The microcomputer 9 calculates the content of the components to be measured using a light intensity distribution, which is optimal for the measurement of each of the specific components to be measured. The light intensity distribution is selected from the stored light intensity distribution information.

As described hereinbefore, there is a distribution of temperature in the plasma flame 2a, which is illustrated in Fig. 7. As a result, the light-emitting position of each of the components to be measured in a plasma flame 2a differs from each other. Moreover, the intensity and frequency of light depend upon whether the light is emitted from the component to be analyzed in an ion state or in a neutral atom state. Therefore, the position, where the ratio of the light amount from the component to be measured to that of the environmental noise (SN ratio) is the maximum, differs according to the kind of the components to be measured.

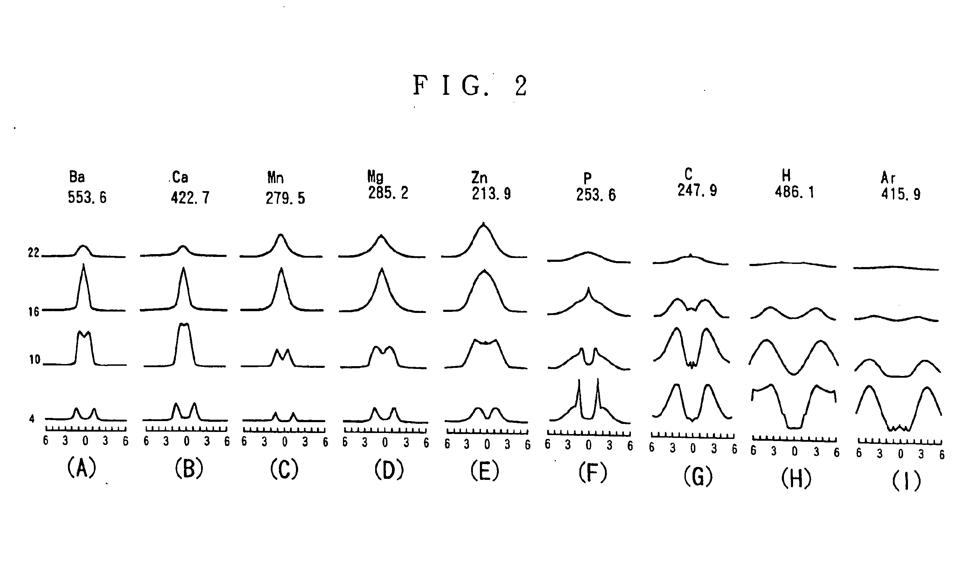

Figs. 2(A) to 2(I) show intensity distributions of light emission by each elements. Figs. 2(A) to 2(I) show intensity distributions of light emitted from different elements as Ba, Ca, Mn, Mg, Zn, P, C, H and Ar. The number disclosed under each of the chemical symbols indicates the wavelength of light to be emitted from each of the elements.

Figs. 2(A) to 2(I) illustrate graphs showing four light intensity distribution at positions in a plasma torch 2, which are at heights of 4 mm, 10mm, 16 mm and 22mm measured from the upper end of the plasma generating torch 2. Namely, the graphs show four light intensity distributions at different heights in the longitudinal direction of the plasma flame 2a. The abscissa of each of the graphs indicates the transverse position in the plasma flame 2a. In the graphs, the light intensity distribution for each of the specific elements is shown in a range within 6 mm in the left and right sides from the center of the plasma torch 2.

As illustrated in Figs. 2(A) to 2(I), the position where each of the specific components emits light strongly is different to each other. For example, as to Ba, Mn, Mg and Zn, the maximum intensity in the height direction is obtained at a height of about 16 mm from the top of the plasma generating torch 2 (where an exiting coil is disposed on the plasma generating torch 2). And as to C, H and the like, a high intensity light can be obtained at a height of about 10 mm in the height direction. With respect to the peripheral direction of the plasma torch, the elements Ba, Ca, Mn, Mg, Zn and P give a high intensity at a portion relatively near to the center of the plasma flame. And C, H and Ar give the maximum intensity at a position separated from the center by 3 to 5 mm.

At the start of loading each component to be measured to the plasma light emission spectroscopic analyzing apparatus 1 according to the present invention, the temperature is increased so that a specific component to be measured emits light in the plasma flame 2a. CCD photo-sensing devices (any of the CCD photo-sensing devices 8a to 8b) sense the light. Each of the CCD photo-sensing devices senses a corresponding wavelength light. The measured value is inputted to the microcomputer 9. Namely, a spatial distribution of the light intensity in the plasma light emission spectroscopic analyzing apparatus 1 is measured, and the information is stored in the memory 9m as light intensity distribution information. On the basis of this light intensity distribution information, pixels in the CCD photo-sensing devices 8a to 8c are selected, which will be used in the quantitative analysis of the unknown sample specimen to be measured.

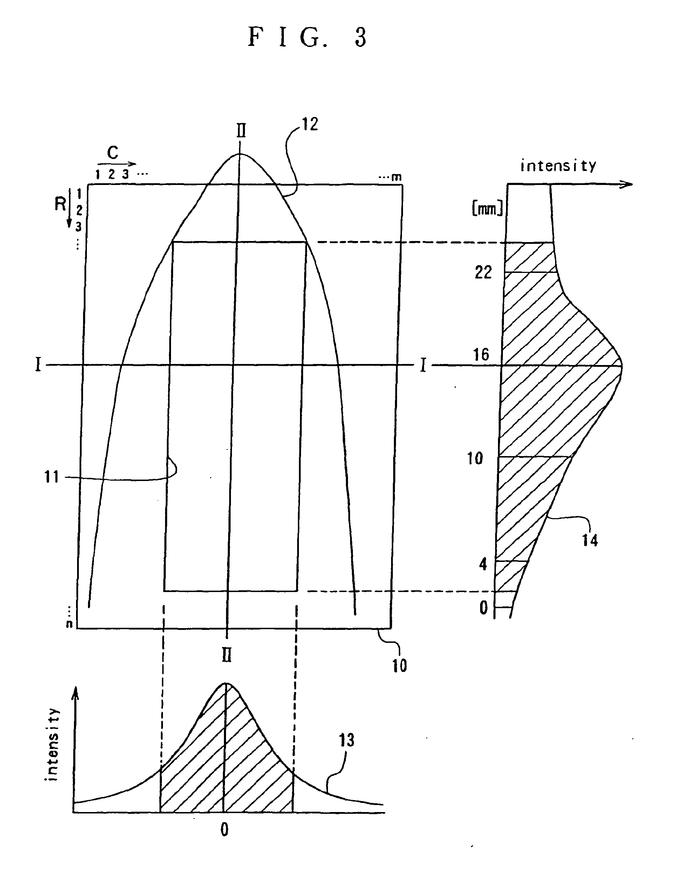

Fig. 3 is a diagram schematically showing the light intensity distribution information with respect to the light emitted from Mn, as an example, heated in a plasma flame 2a. The light is emitted from the side surface of the plasma torch, namely, a transverse photometry is executed in this case. In Fig. 3, reference numeral 10 denotes a photo-sensing surface of the CCD photo-sensing devices 8a to 8c, 11 is a range of light passed through the slit 7a to 7c, 12 is an image of the plasma flame 2a formed on the photo-sensing surface 10.

Reference numeral 13 denotes a light intensity curve sensed by pixels disposed on a transverse line I - I drawn in the photo-sensing surface 10, where an image is formed. Reference numeral 14 denotes a light intensity curve sensed by pixels disposed on a longitudinal line II - II drawn in the photo-sensing surface 10.

It can be convinced from Fig. 3 that, as to the measurement of Mn, the maximum light intensity can be obtained at a position in a central portion in a region of height of 16 mm in the photo-sensing surface 10 of the CCD photo-sensing devices 8a to 8c. The light intensity distribution information is stored in the memory 9m of the microcomputer 9. The pixels, which sense the highest intensity light, are calculated from the light intensity distribution information, and are specified by a row number R (1 to n) and a column number C (1 to m). The output of the specified pixels is used in the photometry.

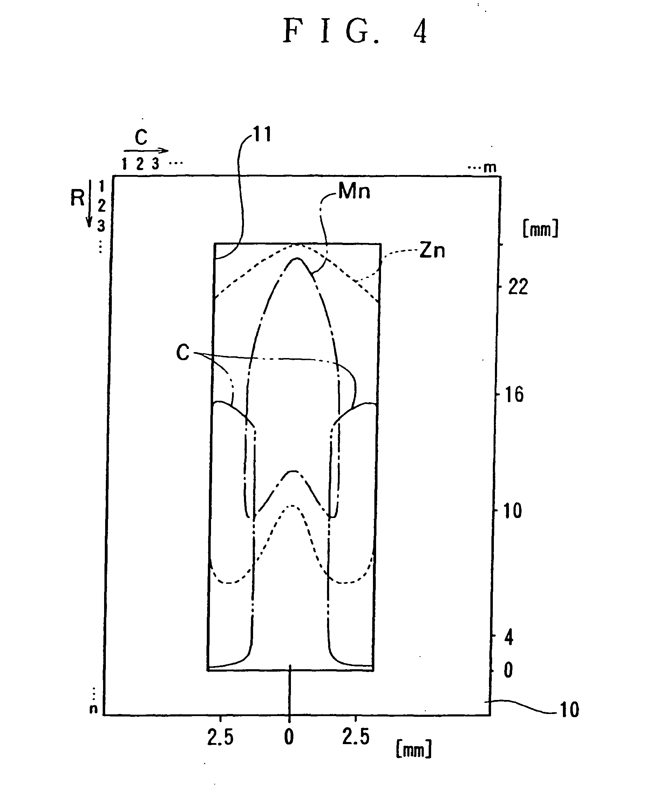

Fig. 4 shows that the sensing region differs according to the specific elements to be measured. The region indicated by a one-point-dotted line in Fig. 4 is the sensing region for Mn, which is described referring to Fig. 3. Namely, the sensing region extends substantially in the central portion in the width direction, and in a region centered at a height of 16 mm in the height direction.

The region indicated by a two-points-dotted line shows the sensing region for C. The region extends in the region of 2.5 mm in both the side regions in the width direction, and in a region centered at a height of 10 mm in the height direction. Namely the region extends in both the right and left sides. The region indicated by a broken line shows the sensing region for Zn. The region includes the sensing region for Mn. The region extends in the substantially central region in the width direction, and in a region centered at a height of 16 mm in the height direction.

These sensing regions are determined, according to the intensity distribution of light emitted from each of the specific components, which will be convinced by referring to the intensity distribution of light emission illustrated in Fig. 2. Namely, pixels, which give a good SN ratio for each of the specific components to be measured, can be selected. In other words, the region where the intensity of light emitted from a component to be measured is weak is excluded. Thus the entering of error due to the noise light other than the light from the component to be measured into the true measured value is prevented.

Users are not demanded to adjust the vertical position of the plasma torch 2, as executed in the prior art so as to increase the measurement preciseness. Namely, laborious works for the measurement can be decreased. Users can select a measurement region, which gives the maximum preciseness, irrespective to the kind of the components to be measured, and he or she can analyze using the selected measurement region. Namely, an analysis at a maximum preciseness can be executed as a matter of routine.

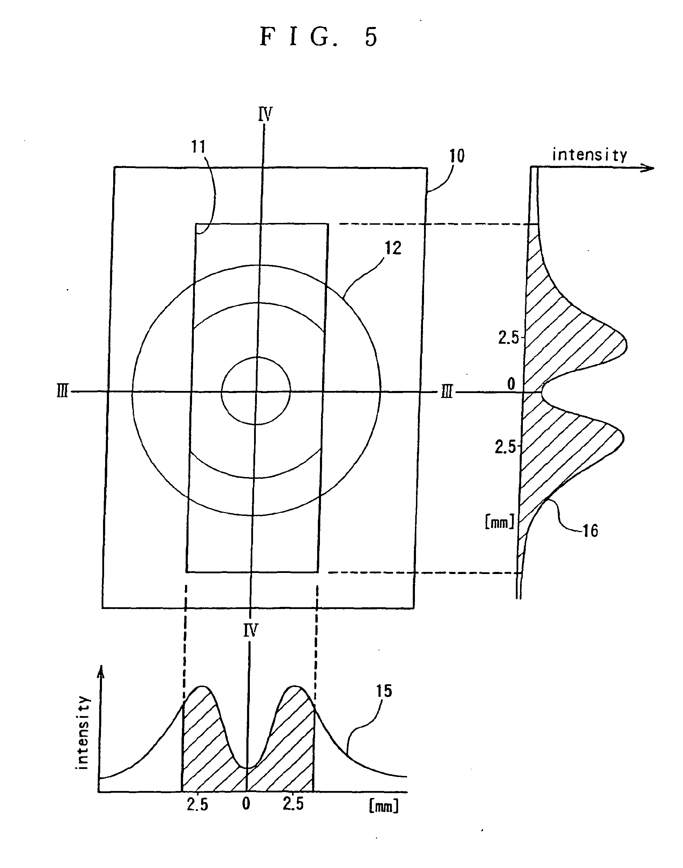

Fig. 5 is a diagram schematically showing the light intensity distribution information with respect to the light emitted from C heated in a plasma flame 2a. The light is emitted from the top of the plasma torch, namely, a longitudinal photometry is executed in this case. In Fig. 5, reference numeral 15 denotes a light intensity curve sensed by pixels, which are disposed on a transverse line III - III drawn in the photo-sensing surface 10 for sensing light illuminated onto this line in the image formed on the surface 10. Reference numeral 16 denotes a light intensity curve sensed by pixels disposed on a longitudinal line IV-IV drawn in the photo-sensing surface 10.

As illustrated in Fig. 5, carbon C has a high intensity region, where the intensity of the light emission is high, in a circular portion around the center of the plasma flame 2a at a distance of 2.5 mm from the center. Therefore, when a longitudinal photometry is executed for carbon C, pixels, which are disposed in a circular band around the center and having a radius of 2.5 mm, are extracted from the pixels in the photo-sensing plane 10 of the CCD photo-sensing devices 8a to 8c. Each of the selected pixels is specified by a row number R (1 to n) and a column number C (1 to m). The outputs of those pixels are used in the photometry.

The spectroscopic analyzing apparatus 1 according to the present invention comprises an optical system L, as described hereinbefore, referring to Figs. 3 to 5. The optical system L comprises one lens 3 disposed in front of the first slit 5. When the light passed through the first slit enters into the diffraction grating 6, the grating disperses the light, according to the wavelength. The dispersed light is condensed on the outlet slits 7a to 7c provided in accordance with the each wavelength on the Rawland circle 4, and an image 12 of the larger part of the plasma flame 2a is formed on the photo-sensing plane 10 of the photo-sensing devices 8a to 8c by the optical system L. Selecting a measuring region in the CCD photo-sensing devices 8a to 8c corresponding for each of the components to be measured, a high preciseness analysis can be attained.

As to the magnitude of the image 12 formed on the photo-sensing plane 10 of the CCD photo-sensing devices 8a to 8c, it is not required to contain the border area of the plasma flame 2a. However, it is necessary to contain the image of the larger part of the plasma flame 2a. Namely, the lens 3, the dimensions of the inlet slit 5, the diffraction grating 6 and the outlet slits 7a to 7c shall be designed so that an image of the larger part of the plasma flame 2a is formed on the photo-sensing plane 10 of the CCD photo-sensing devices 8a to 8c.

This embodiment discloses an example for measuring simultaneously three components to be measured, using three outlet slits 7a to 7c and three CCD photo-sensing devices 8a to 8c, which are previously disposed for each of the components to be measured. The three positions correspond to the wavelength dispersion by the diffraction grating 6. However, the scope of the present invention is not limited to this example. It is possible to use four or more or two or less outlet slits and corresponding number of the photo-sensing devices. It is also possible to dispose one outlet slit 7 and one CCD photo-sensing device 8 on the Rowland circle 4 so that they can rotate along the Rowland circle. By rotating them, a desired quantitative analysis of the components can be attained.

This embodiment discloses an example applied to an atomic emission spectroscopy, in which atoms are heated by means of a plasma flame 2a so as to emit light. However, the present invention is not limited to this embodiment. Namely, the light source can be the light source used in GDS analyzer. In other words, when the spectroscopic analyzing apparatus 1 according to the present invention is used, it is possible to use any light source, in which lights having different wavelength are generated according to the components and depending on the position therein. Even when such a light source is used, the measurement preciseness can be improved as best as possible.

As described hereinbefore, when the spectroscopic analyzing apparatus according to the present invention is used, it is possible to execute a photometry of light from a light source, in which lights having different wavelength according to the component to be measured and depending on the position therein are generated. In the photometry, pixels are selected from the pixels in the CCD photo-sensing devices so that each of them senses light corresponding to a specific component to be measured at the maximum SN ratio. The light intensity obtained by those selected pixels is used for the quantitative analysis. Thus, according to the present invention, it is possible to select light coming from a position in the light source, which gives the maximum SN ratio, for each of the components to be measured.

Each of the components to be measured can be analyzed at an optimal measuring position, therefore, a higher preciseness quantitative analysis is possible. The position adjustment of the plasma flame position by the user for improving the SN ratio is no longer required. The SN ratio inherent to the analysis can be obtained as a matter of routine. It is always possible to execute a measurement at the upper limit of the sensing preciseness.

## Claims

1. A spectroscopic analyzing apparatus (1), comprising
- a light source (2), for emitting different light spectra, each light spectrum being inherent to a component to be measured located in said light source and having a different strength distribution according to the respective light emitting position in said light source;
- a spectroscope (6) for dispersing the light from the light source (2) according to its wavelength;
- at least one CTD photo sensor (8a - 8c) for sensing light being dispersed by the spectroscope (6) and lying within a specific wavelength range;
- an optical system (9) for analyzing the light sensed by said at least one CTD photo sensor (8a - 8c), thereby making an image of the light source (2),
**characterized by**:
- a memory (9m) for storing light intensity spatial distribution information, which is information about the spatial intensity distribution of light emitted from a predetermined quantity of each component to be measured;
- an operational portion for determining which components have been measured, which is done on the basis of the values which are measured by said at least one CTD sensor (8a - 8c), in particular on the basis of values lying within a strong light portion indicated by the light intensity spatial distribution information and possessing intensity spatial distribution; and
- means which is adapted for selecting pixels in said at least one CDT sensor (8a - 8c) based on said light intensity spatial distribution in order to be used for quantitative analysis or an unknown sample specimen located in said light source to be measured.

2. The spectroscopic analyzing apparatus (1) according to claim 1,
wherein said optical system (9) is polychromatic, and wherein a plurality of CTD photo-sensing devices (8a - 8c) are disposed at corresponding outlet slits (7a - 7c), each of which corresponding to a specific wavelength range, and being disposed on a Rowland circle (4), wherein each of the CTD photo-sensing devices (8a - 8c) senses only the light lying within the corresponding wavelength range.

3. The spectroscopic analyzing apparatus (1) according to any one of the claims 1 or 2,
wherein said light source (2) is a plasma torch having a plasma flame (2a), in which sample specimen emits light.

## Patentansprüche

1. Gerät zur spektroskopischen Analyse (1), umfassend
- eine Lichtquelle (2) zum Emittieren unterschiedlicher Lichtspektren, wobei jedes Lichtspektrum einer zu messenden, sich in der Lichtquelle befindenden Komponente inhärent ist und eine unterschiedliche Stärkeverteilung in Übereinstimmung mit der jeweiligen Lichtemissionsposition in der Lichtquelle aufweist;
- ein Spektroskop (6) zum Dispergieren des Lichts von der Lichtquelle (2) in Übereinstimmung mit seiner Wellenlänge;
- zumindest einen CTD-Photosensor (8a - 8c) zum Abtasten von Licht, das durch das Spektroskop (6) dispergiert wurde und innerhalb eines bestimmten Wellenlängenbereichs liegt;
- ein optisches System (9) zum Analysieren des durch den zumindest einen CTD-Photosensor,(8a - 8c) abgetasteten Lichts, wodurch ein Bild der Lichtquelle (2) erstellt wird,
**gekennzeichnet durch**:
- einen Speicher (9m) zum Speichern von Informationen über die räumliche Verteilung der Lichtintensität, welches Informationen über die räumliche Intensitätsverteilung sind, das von einer vorbestimmten Größe jeder zu messenden Komponente emittiert wurde;
- einen Betriebsabschnitt zum Ermitteln, welche Komponenten gemessen wurden, welches auf der Grundlage der Werte erfolgt, welche **durch** den zumindest einen CTD-Sensor (8a - 8c) gemessen werden, insbesondere auf der Grundlage von Werten, die innerhalb einem starken Lichtabschnitt liegen, der **durch** die Informationen über die räumliche Verteilung der Lichtintensität angegeben wird, und eine räumliche Intensitätsverteilung besitzen; und
- eine Einrichtung, welche dazu ausgelegt ist, Pixel in dem zumindest einen CTD-Sensor (8a - 8c) auf der Grundlage der räumlichen Lichtintensitätsverteilung auszuwählen, um zur quantitativen Analyse oder als ein zu messendes, sich in der Lichtquelle befindendes unbekanntes Probemuster verwendet zu werden.

2. Gerät zur spektroskopischen Analyse (1) nach Anspruch 1, bei dem das optische System (9) polychrom ist, und bei dem eine Vielzahl von CTD-Photoabtasteinrichtungen (8a - 8c) an entsprechenden Auslassschlitzen (7a - 7c) angeordnet sind, von welchen jeder einem bestimmten Wellenlängenbereich entspricht und auf einem Rowland-Kreis (4) angeordnet ist, wobei jede der CTD-Photoabtasteinrichtungen (8a - 8c) nur das Licht abtastet, welches innerhalb dem entsprechenden Wellenlängenbereich liegt.

3. Gerät zur spektroskopischen Analyse (1) nach einem der Ansprüche 1 oder 2, bei dem die Lichtquelle (2) ein Plasmabrenner ist mit einer Plasmaflamme (2a), welcher ein Probenmuster Licht emittiert.

## Revendications

1. Appareil d'analyse spectroscopique (1), comprenant
une source optique (2) destinée à émettre différents spectres de lumière, chaque spectre de lumière étant inhérent à une composante à mesurer, située dans ladite source optique, et ayant une distribution de puissance différente selon sa position respective d'émission de lumière dans ladite source optique :
un spectroscope (6) destiné à disperser la lumière issue de la source optique (2) selon sa longueur d'onde ;
au moins un détecteur photo-électrique CTD (8a - 8c) destiné à détecter la lumière dispersée par le spectroscope (6) et résidant dans une plage de longueurs d'ondes spécifique ;
un système optique (9) destiné à analyser la lumière détectée par ledit détecteur photo-électrique CTD (8a - 8c), pour réaliser ainsi une image de la source optique (2),
**caractérisé par** :
une mémoire (9m) destinée à stocker les informations de distribution spatiale d'intensité lumineuse, qui sont des informations sur la distribution spatiale d'intensité de la lumière émise par une quantité prédéterminée de chaque composante à mesurer ;
une partie opérationnelle destinée à déterminer quelles composantes ont été mesurées, ce qui est effectué en se basant sur les valeurs mesurées par ledit au moins détecteur photo-électrique CTD (8a - 8c), en particulier les valeurs résidant dans une partie à forte lumière, indiquée par les informations de distribution spatiale d'intensité lumineuse et possédant une distribution spatiale d'intensité lumineuse ; et
des moyens, adaptés pour sélectionner des pixels, dans ledit détecteur photo-électrique CTD (8a - 8c), en se basant sur ladite distribution d'intensité lumineuse, destinés à être utilisés pour une analyse quantitative d'un échantillon inconnu du spécimen échantillon, situé dans ladite source optique, à mesurer.

2. Appareil d'analyse spectroscopique (1) selon la revendication 1,
dans lequel ledit système optique (9) est polychromatique, et dans lequel plusieurs dispositifs de détection photo-électrique CTD (8a - 8c) sont disposés au niveau de fentes de sortie correspondantes (7a - 7c), chacune d'elles correspondant à une longueur d'onde spécifique, et étant disposée sur un cercle de focalisation (4), dans lequel chacun des dispositifs de détection photo-électrique CTD (8a - 8c) ne détecte que la lumière résidant dans la plage de longueurs d'ondes correspondante.

3. Appareil d'analyse spectroscopique (1) selon l'une quelconque des revendications 1 et 2,
dans lequel ladite source optique (2) est un pistolet à plasma générant une flamme de plasma (2a), dans lequel le spécimen échantillon émet de la lumière.
